# EUROPEAN PATENT SPECIFICATION

(11) **EP 4 494 218 B1**
(45) Date of publication and mention of the grant of the patent: **25.02.2026**
(21) Application number: 23713605.6
(22) Date of filing: 17.03.2023
(51) Int. Cl.: H01R 11/30, H01R 4/64, H01R 13/62, H01R 13/633, H01R 11/14, G01R 31/08

(54) **MAGNETIC EARTH CLAMP FOR OVERHEAD LINE EQUIPMENT STRUCTURES**
MAGNETISCHE ERDKLEMME FÜR OBERLEITUNGSAUSRÜSTUNGSSTRUKTUREN
PINCE DE MISE À LA TERRE MAGNÉTIQUE POUR STRUCTURES D'ÉQUIPEMENT DE LIGNE AÉRIENNE

(30) Priority: 17.03.2022 GB 202203745
(43) Date of publication of application: 22.01.2025
(73) Proprietor: Network Rail Infrastructure Limited, London SE1 8SW (GB)
(72) Inventor: NEL, Louis, London, Greater London SE1 7QY (GB)
(74) Representative: Heinonen & Co
(86) International application number: PCT/EP2023/056941
(87) International publication number: WO 2023/175168

(56) References cited:
- EP-A1- 0 688 694
- CN-A- 112 117 555
- CN-A- 113 991 330
- CN-U- 213 905 630

## Description

### FIELD OF THE INVENTION

Generally, the present invention relates to electromechanic arrangements for earthing overhead line structures. Particularly, however not exclusively, the invention pertains to a universal portable earth clamp.

### BACKGROUND

Existing portable earthing solutions for Overhead Line Equipment (OLE) generally require the provision of structure mounted earth attachment points with associated fixings, which is usually in the form of a peg. The existing portable earthing solutions require structure mounted earth attachment points to apply a short portable earth. Such solutions are typically sprung jaw type in design. These solutions have the shortcoming of having to use earth attachment points, which can impact access and cause cancellation of work if earth attachment points are missing or broken since earth attachment points are typically only fitted 400 meters apart from each other. Since the earth attachment points are not provided at all structures this limits the overhead line structures where portable earths can be applied.

Hence, there is a need for a more universal type earth clamp solution that evades the use of earth attachment points and allows for associated safety, time and cost benefits be realised whilst optimising the time available to undertake work within very constrained railway infrastructure access windows.

CN 112 117 555 A discloses a grounding or earthing clamp, meant to be lowered onto the vertical portion of an L-shape part of an overhead powerline pole. That clamp is secured by a magnet spring-biased towards the L-shaped part, released from a retracted position by the actuation of a proximity switch that detects the L-shaped part's insertion in the clamp.

### SUMMARY OF THE INVENTION

The objective of the embodiments of the present invention is to at least alleviate one or more of the aforementioned drawbacks evident in the prior art arrangements. The objective is generally achieved with an arrangement and method in accordance with the claim set.

The present invention provides an earth clamp especially usable for OLE structures that offer a suitable surface of ferromagnetic material. One example of an application of the present invention is when a single earth or multiple earths are required at an OLE structure where there are no dedicated or specific earth attachment point pegs for the application of conventional earth clamps. Another example includes a situation where the earth attachment point pegs are damaged or missing preventing the application of conventional short portable earths. Some other applications include where long portable earths have been typically used. Some further applications include where a visible earth is required to be applied at a site of work to an OLE structure.

Benefits of the present invention comprise providing a short portable earth option that can be used on a number of overhead line structures having a suitable surface of ferromagnetic material without a requirement for earth attachment points to be fitted. Further, the present invention provides an alternative option to the use of long portable earths in certain cases thus offering a direct safety benefit due to the risks associated with long portable earths. Further, the present invention provides a short portable earth option that can be utilised in the case of broken or missing earth attachment points. Further, the present invention enables an optimised approach to earthing and the use of a single additional earth at an overhead line structure. Further, the present invention enables a visible earth to be applied at a site of work to an OLE structure to prove the equipment has been made dead. Further, the present invention is compatible with use of existing live working poles and associated dispensing/retrieval adaptors.

In accordance with one aspect of the present invention an earth clamp for overhead line structures, comprising:
- a clamp frame comprising a profile having a flat contact point at each end of the profile and a middle part at different height than each contact point at each end of the profile,
- at least one magnetic part arranged to the clamp frame for magnetically attaching the clamp frame against a surface, said magnetic part being situated towards the middle part of the frame profile,
   ∘ wherein the magnetic part is arranged to move in relation to the frame between the level of the contact points and away from the level defined by the contact points towards the middle part, to allow the earth clamp to be attached to a structure facilitating mechanical and electrical connection thereof with the overhead line structure through the magnetic part and the contact points, and
   ∘ comprising means to move the earth clamp frame and/or the magnetic part in relation to the overhead line structure to counteract the magnetic force exerted by the magnetic part to the overhead line structure in order to release the earth clamp from the overhead line structure.

In accordance with an embodiment of the present invention the earth clamp comprising mechanical actuation lever for moving the earth clamp frame and/or the magnetic part in a direction away from a structure when the earth clamp is attached to the structure.

In accordance with an embodiment of the present invention the mechanical actuation lever for moving the earth clamp frame and/or magnetic part at least away from the structure when the earth clamp is attached to a structure may be used with a dispensing head.

In accordance with an embodiment of the present invention the clamp frame may comprise a curvilinear profile.

In accordance with an embodiment of the present invention the earth clamp comprises a spring connected with the magnetic part to facilitate counterforce to the magnetic part and moving the magnetic part away from the level of the contact points.

In accordance with an embodiment of the present invention the earth clamp wherein connection between the magnet and the spring assembly is electrically insulated from the clamp frame.

In accordance with an embodiment of the present invention the magnetic part is electrically bonded to the clamp frame via a flexible braid connection.

In accordance with an embodiment of the present invention the earth clamp frame the earth clamp frame incorporates guides that aid correct positioning and application of the earth clamp frame.

In accordance with an embodiment of the present invention the earth clamp comprises a permanently attached protective cover applied over the magnet that allows safe handling and storage when not in use.

In accordance with an embodiment of the present invention the earth clamp comprises a removable cover for the magnetic part.

In accordance with an aspect of the present invention a portable earth arrangement comprising the earth clamp arrangement of claim 1 and a line end connected thereto.

As briefly reviewed hereinbefore, the utility of the different aspects of the present invention arises from a plurality of issues depending on each particular embodiment.

The expression "a number of" may herein refer to any positive integer starting from one (1). The expression "a plurality of" may refer to any positive integer starting from two (2), respectively.

Different embodiments of the present invention are also disclosed in the attached dependent claims.

### BRIEF DESCRIPTION OF THE RELATED DRAWINGS

Next, some exemplary embodiments of the present invention are reviewed more closely with reference to the attached drawings, wherein
Fig. 1 illustrates a front view of an embodiment of the earth clamp,
Fig. 2 illustrates a rear view of an embodiment of the earth clamp,
Fig. 3 illustrates a side view of an embodiment of the earth clamp,
Fig. 4 illustrates an isometric view of an embodiment of the earth clamp,
Fig. 5 illustrates a view wherein an embodiment of the earth clamp is attached to an overhead line structure,
Fig. 6 illustrates a view wherein an embodiment of the earth clamp is attached to an overhead line structure,
Fig. 7 illustrates a general view of the earth clamp in use,
Fig. 8 illustrates a general view of another embodiment of the earth clamp, and
Fig. 9 illustrates another general view of another embodiment of the earth clamp.

### DETAILED DESCRIPTION OF THE EMBODIMENTS

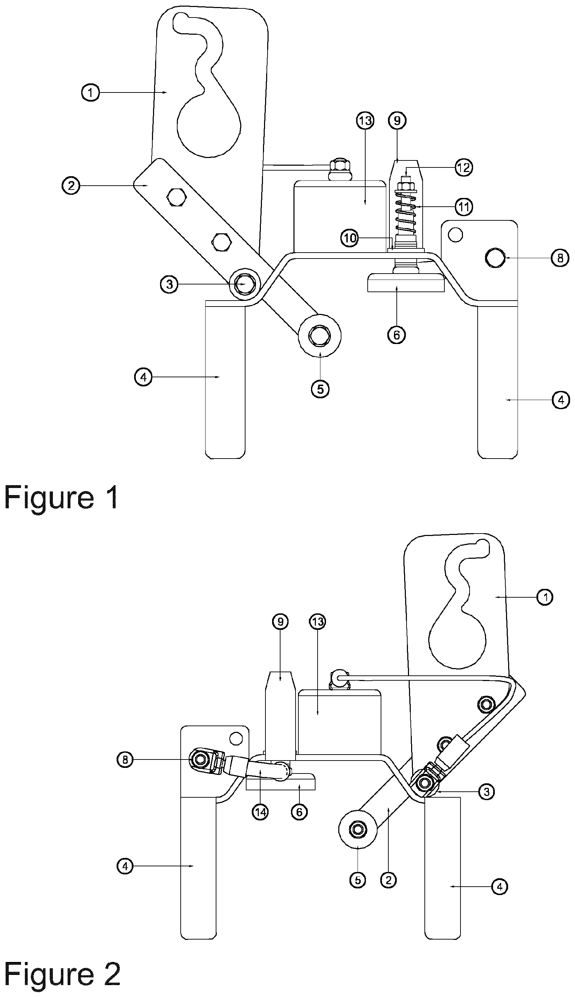

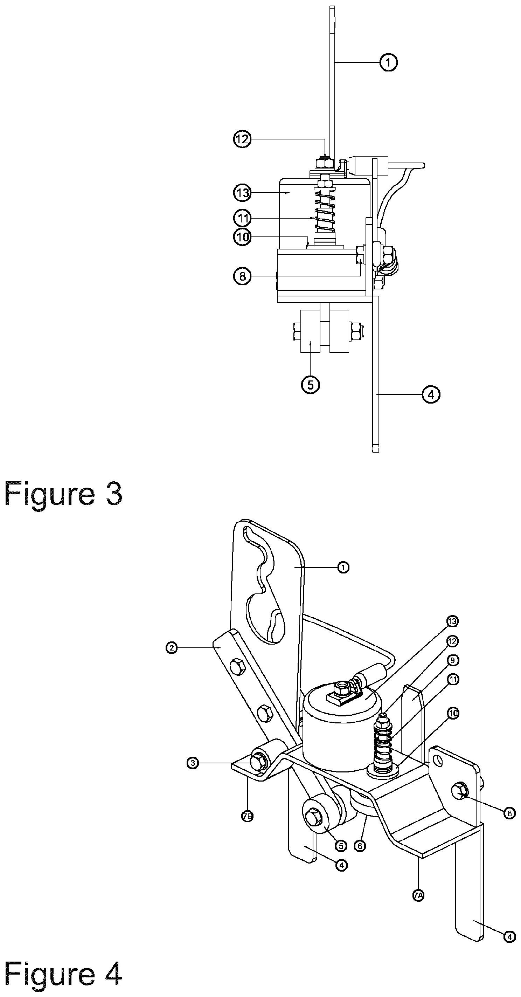

Figures 1-4 illustrate main aspects of the earth clamp.

The earth clamp in accordance with the illustrated embodiment comprises the following features.
(1) Retrieval bracket
(2) Release mechanism arm
(3) Release mechanism hinge point
(4) Guide
(5) Release mechanism roller
(6) Magnet
(7A) Clamp frame front contact point
(7B) Clamp frame rear contact point
(8) Earth cable connection terminal
(9) Application lug
(10) Insulation
(11) Spring
(12) Connection bolt
(13) Magnet cap stow cup
(14) Earth cable

The earth clamp comprises at least a clamp frame comprising a curvilinear profile, having a flat contact point (7A, 7B) or pad at each end of the profile and a middle part at different height than each contact point (7A, 7B) at each end of the profile. The contact points (7A, 7B) are fixed and form the horizontal plane or level, which may connect with an OLE structure. The curvilinear profile of the clamp frame may comprise a continuous profile with rounded edges between the middle part and the contact points (7A, 7B), as illustrated, or the clamp frame profile may comprise a profile with sharp edges between the middle part and the contact points (7A, 7B), for example wherein a horizontal middle part and horizontal contact points (7A, 7B) have a vertical or angled areas therebetween with sharp corners dividing the different areas yielding e.g. a "top-hat shape" or the like.

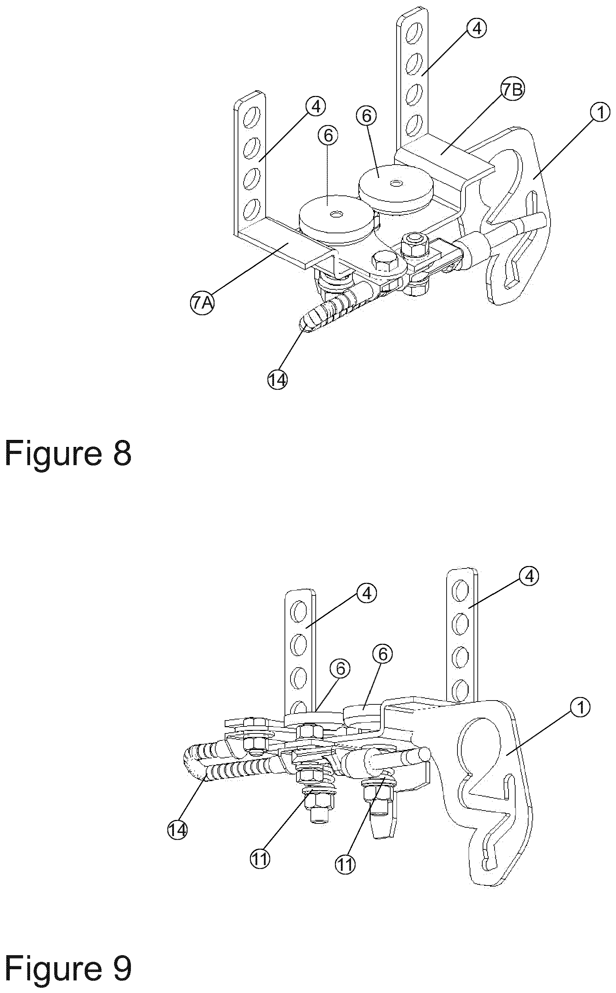

The earth clamp further comprises at least one magnetic part, such as a magnet (6) or a plurality of magnets (6), arranged to the clamp frame for magnetically attaching the frame against a surface, said magnetic part being situated towards the middle of the frame profile. The magnet (6) is arranged to move in relation to the frame between the level of the contact points (7A, 7B) and above the level defined by the contact points (7A, 7B), as illustrated in Fig. 1 and 2 wherein the touching surface of the magnet (6) can be clearly seen to be moved above in relation to the level of the contact points (7A, 7B), i.e. away from the level defined by the contact points (7A, 7B), which is also the horizontal level or plane at which the magnetic part connects with the OLE structure, and towards the level of the middle of the clamp frame, to allow the earth clamp to be attached to a structure facilitating mechanical and electrical connection thereof with the overhead line structure through the magnetic part and the contact points. I.e. the magnet (6) is arranged to move "inside" the earth clamp profile, such as in a vertical direction via a spring connection (11) at the middle part of the clamp frame. The earth clamp also comprises means, such as a mechanical actuation lever formed by a retrieval bracket (1), release mechanism arm (2), a release mechanism hinge point (3) and release mechanism roller (5), to move, such as by lever actuation or simply pulling the earth clamp away from a structure, at least the clamp frame in relation to the overhead line structure to counteract and overcome the magnetic force exerted by the magnet (6) to the overhead line structure in order to release the earth clamp from the overhead line structure. For example, as illustrated in Figs. 1-6 the earth clamp comprises a retrieval bracket (1), release mechanism arm (2), a release mechanism hinge point (3) and release mechanism roller (5) wherein by operation of the retrieval bracket (1) the release mechanism roller (5) may be pressed against the OLE structure to which the earth clamp is connected and via the release mechanism arm (2) and release mechanism hinge point (3) a mechanical force can be exerted to move the earth clamp frame in relation to the overhead line structure and to release the earth clamp from the OLE structure. Alternatively, the earth clamp may comprise another type of mechanism to move the earth clamp in relation to the OLE structure, such as a retrieval bracket (1) connected directly to the earth clamp frame, as illustrated in the embodiment of Figs. 8 and 9, so that the earth clamp may be pulled away from an OLE structure by pulling the retrieval bracket (1). Alternatively or additionally, the earth clamp may comprise means to move the magnet (6) at least away from the level of the contact points (7A, 7B). The magnet (6) may be connected with a spring (11) via insulation (10) at the frame to help counteract the magnetic force exerted by the magnet (6) and move the magnet at least away from the level of the contact points (7A, 7B) when the earth clamp is not connected to a structure. This way the magnet (6) may move against and attach to a ferromagnetic structure on level with the contact points (7A, 7B) attaching the earth clamp to the structure, and the earth clamp frame and/or the magnet (6) may also be moved away from connection by operation of the bracket (1) counteracting the magnetic force exerted to a structure and hence detaching the earth clamp from the structure. A protective cover, such as a magnet cap stow cup (13), may be used over the magnet that allows safe handling and storage when not in use. The protective cover may be permanently fixed or removable. The insulation (10) is used to electrically insulate the magnet and the spring assembly from the clamp frame. As illustrated, the magnet (6) may be electrically bonded to the clamp frame via a flexible braid connection.

The earth clamp may further comprise guides (4) for easier operation and attachment of the earth clamp to an OLE structure. Such guides (4) are beneficial since the earth clamp is operated by a live working pole from a distance away and at height. Further, the earth clamp may comprise an application lug (9) or similar structure for hoisting the earth clamp with a live working pole at height.

The earth clamp further comprises an earth cable connection terminal (8) connected via an earth cable (14) to the magnet (6) for connecting the earth clamp with a line end.

Although not illustrated the earth clamp may comprise a housing or a removable cover
The earth clamp further comprises a connection means for connecting a line end with a line to the earth clamp.

The earth clamp is particularly suitable railway applications and related environments including on 25 kV AC, 12 kA rated systems.

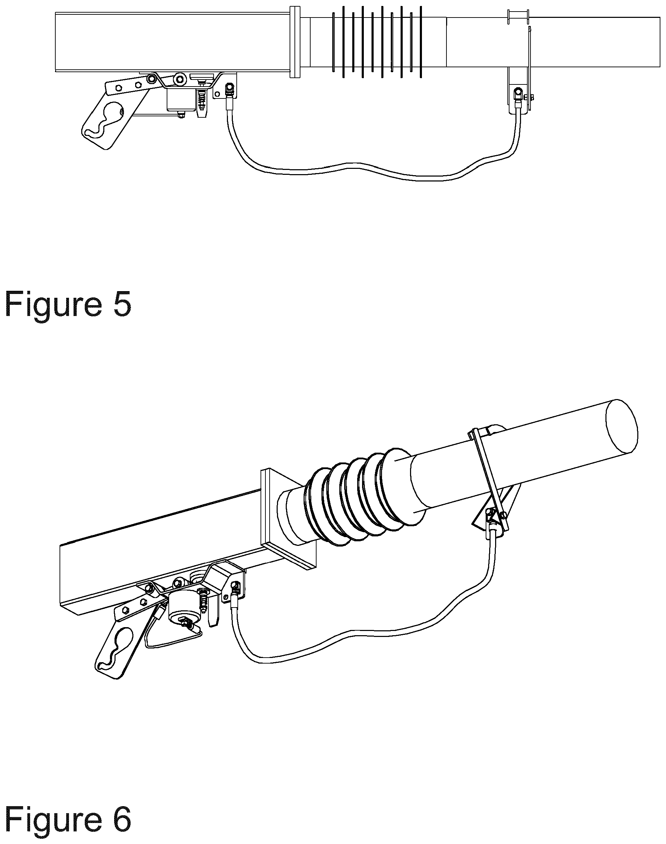

Figures 5-6 illustrate the earth clamp attached to an OLE. Therein the earth clamp is shown to be attached to flat surface of ferromagnetic material. The earth clamp is shown to be connected to a line end, which may comprise a conventional line end clamp operable at height by a live working pole the earth clamp and line end essentially constituting a portable earth. As illustrated, the live part is separated by the insulator from the rest of the OLE structure such as the mast to which the earth clamp may be connected. The cable connection between the line end clamp and the earth clamp may be kept substantially short.

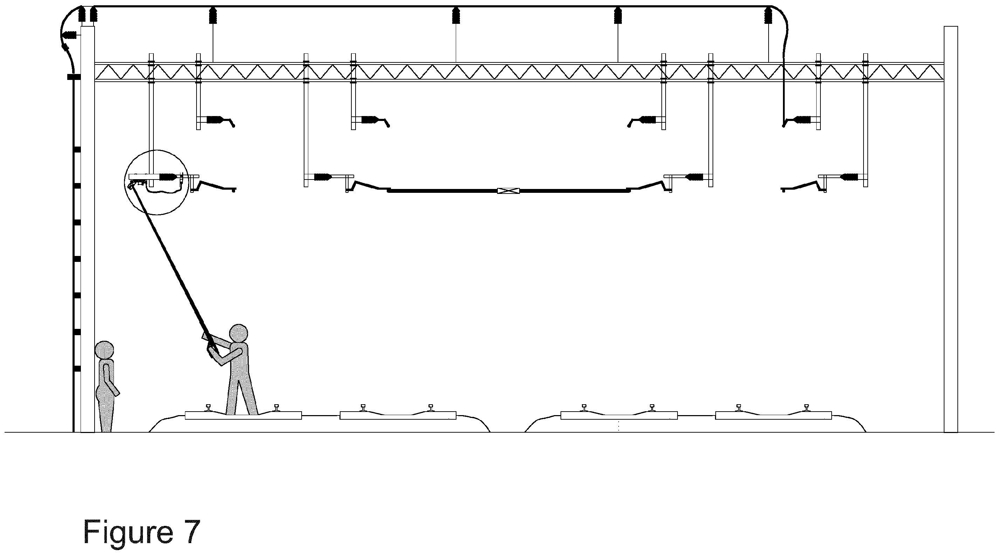

Figure 7 illustrates an example setting of the earth clamp in use. In this application an overhead line equipment structure for railways is shown for which the operator uses the earth clamp. The operator may use a conventional live working pole with suitable dispensing and retrieval adaptors, such as a dispensing head or other operating sockets, to attach and detach the earth clamp at height and at a preferred location having a surface of ferromagnetic material. The operation is convenient since placing the earth clamp at a certain part is simple since only a sufficiently flat ferromagnetic surface is needed. Due to the magnetic force the earth clamp attaches automatically to a ferromagnetic surface and removal is also simple since the magnetic force can be easily counteracted via the mechanical actuation lever, which the operator can operate with the live working pole. As can be seen from the figure 7 the earth clamp provides for a visible earth which can be applied at a site of work to prove the overhead line equipment has been made dead. Since the earth clamp may be attached on any substantially flat ferromagnetic surface the earthing can be done at height avoiding the need for a long portable earth.

The scope of the invention is determined by the attached claims. The skilled persons will again appreciate the fact that the disclosed embodiments were constructed for illustrative purposes only, and the innovative fulcrum reviewed herein will cover further embodiments, embodiment combinations, variations and equivalents that better suit each particular use case of the invention.

## Claims

1. An earth clamp for overhead line structures, comprising
- a clamp frame comprising a profile having a flat contact point (7A, 7B) at each end of the profile and a middle part at different height than each contact point at each end of the profile,
- at least one magnetic part (6) arranged to the clamp frame for magnetically attaching the clamp frame against a surface, said magnetic part being situated towards the middle part of the frame profile,
∘ wherein the magnetic part (6) is arranged to move in relation to the frame between the level of the contact points and away from the level defined by the contact points towards the middle part, to allow the earth clamp to be attached to a structure facilitating mechanical and electrical connection thereof with the overhead line structure through the magnetic part (6) and the contact points (7A, 7B), and
∘ comprising means to move the earth clamp frame and/or the magnetic part in relation to the overhead line structure to counteract the magnetic force exerted by the magnetic part to the overhead line structure in order to release the earth clamp from the overhead line structure.

2. The earth clamp of claim 1 wherein the earth clamp comprises a mechanical actuation lever for moving the earth clamp frame and/or the magnetic part in a direction away from a structure when the earth clamp is attached to the structure.

3. The earth clamp of claim 2 wherein the mechanical actuation lever for moving the earth clamp frame and/or magnetic part at least away from the structure when the earth clamp is attached to a structure is arranged to be used with a dispensing head.

4. The earth clamp of any preceding claim, the clamp frame comprising a curvilinear profile.

5. The earth clamp of any preceding claim wherein the earth clamp comprises a spring connected with the magnetic part to facilitate counterforce to the magnetic part and moving the magnetic part away from the level of the contact points.

6. The earth clamp of any preceding claim wherein the connection between the magnetic part and the spring is electrically insulated from the clamp frame.

7. The earth clamp of any preceding claim wherein the magnetic par (6) is electrically bonded to the clamp frame via a flexible braid connection.

8. The earth clamp of any preceding claim wherein the earth clamp frame incorporates guides.

9. The earth clamp of any preceding claim wherein the earth clamp comprises a permanently attached protective cover applied over the magnet.

10. The earth clamp of any of claims 1-8 wherein the earth clamp comprises a removable cover for the magnetic part.

11. A portable earth comprising the earth clamp of claim 1 and a line end connected thereto.

## Patentansprüche

1. Erdungsklemme für Freileitungsstrukturen, umfassend
- einen Klemmenrahmen, der ein Profil umfasst, das eine flache Kontaktstelle (7A, 7B) an jedem Ende des Profils und einen mittleren Teil auf einer anderen Höhe als jede Kontaktstelle an jedem Ende des Profils aufweist,
- mindestens einen magnetischen Teil (6), der an dem Klemmenrahmen angeordnet ist, um den Klemmenrahmen magnetisch an einer Oberfläche anzubringen, wobei der magnetische Teil zu dem mittleren Teil des Rahmenprofils hin liegt,
∘ wobei der magnetische Teil (6) angeordnet ist, um sich in Verbindung mit dem Rahmen zwischen der Ebene der Kontaktstellen und von der Ebene weg, die durch die Kontaktstellen definiert ist, zu dem mittleren Teil hin zu bewegen, um zu ermöglichen, dass die Erdungsklemme an einer Struktur angebracht wird, die eine mechanische und elektrische Verbindung davon mit der Freileitungsstruktur durch den magnetischen Teil (6) und die Kontaktstellen (7A, 7B) erleichtert, und
∘ umfassend Mittel zum Bewegen des Erdungsklemmenrahmens und/oder des magnetischen Teils in Bezug auf die Freileitungsstruktur, um der magnetischen Kraft entgegenzuwirken, die von dem magnetischen Teil auf die Freileitungsstruktur ausgeübt wird, um die Erdungsklemme von der Freileitungsstruktur freizugeben.

2. Erdungsklemme nach Anspruch 1, wobei die Erdungsklemme einen mechanischen Betätigungshebel zum Bewegen des Erdungsklemmenrahmens und/oder des magnetischen Teils in einer Richtung von einer Struktur weg, wenn die Erdungsklemme an der Struktur angebracht ist, umfasst.

3. Erdungsklemme nach Anspruch 2, wobei der mechanische Betätigungshebel zum Bewegen des Erdungsklemmenrahmens und/oder des magnetischen Teils mindestens von der Struktur weg, wenn die Erdungsklemme an einer Struktur angebracht ist, eingerichtet ist, um mit einem Abgabekopf verwendet zu werden.

4. Erdungsklemme nach einem der vorherigen Ansprüche, wobei der Klemmenrahmen ein krummliniges Profil umfasst.

5. Erdungsklemme nach einem der vorherigen Ansprüche, wobei die Erdungsklemme eine Feder umfasst, die mit dem magnetischen Teil verbunden ist, um eine Gegenkraft in Bezug auf den magnetischen Teil zu ermöglichen und den magnetischen Teil von der Ebene der Kontaktstellen weg zu bewegen.

6. Erdungsklemme nach einem der vorherigen Ansprüche, wobei die Verbindung zwischen dem magnetischen Teil und der Feder elektrisch von dem Klemmenrahmen isoliert ist.

7. Erdungsklemme nach einem der vorherigen Ansprüche, wobei der magnetische Teil (6) über eine flexible Geflechtverbindung elektrisch mit dem Klemmenrahmen verbunden ist.

8. Erdungsklemme nach einem der vorherigen Ansprüche, wobei der Erdungsklemmenrahmen Führungen beinhaltet.

9. Erdungsklemme nach einem der vorherigen Ansprüche, wobei die Erdungsklemme eine permanente angebrachte Schutzabdeckung umfasst, die über dem Magnet aufgebracht ist.

10. Erdungsklemme nach einem der Ansprüche 1-8, wobei die Erdungsklemme eine entfernbare Abdeckung für den magnetischen Teil umfasst.

11. Tragbare Erdung, die die Erdungsklemme nach Anspruch 1 und ein damit verbundenes Leitungsende umfasst.

## Revendications

1. Pince de mise à la terre pour structures de lignes aériennes, comprenant :
- un cadre de pince comprenant un profilé comportant un point de contact plat (7A, 7B) à chaque extrémité du profilé et une partie centrale à une hauteur différente de chaque point de contact à chaque extrémité du profilé,
- au moins une partie magnétique (6) disposée sur le cadre de pince pour fixer magnétiquement le cadre de pince contre une surface, ladite partie magnétique étant située vers la partie centrale du profilé du cadre,
∘ dans laquelle la partie magnétique (6) est disposée afin de se déplacer par rapport au cadre entre le niveau des points de contact et en s'éloignant du niveau défini par les points de contact vers la partie centrale, afin de permettre la fixation de Pince de mise à la terre à une structure facilitant la connexion mécanique et électrique de celle-ci avec la structure de ligne aérienne par l'intermédiaire de la partie magnétique (6) et des points de contact (7A, 7B) et
∘ comprenant des moyens pour déplacer le cadre de pince de mise à la terre et/ou la partie magnétique par rapport à la structure de la ligne aérienne afin de contrer la force magnétique exercée par la partie magnétique sur la structure de ligne aérienne de manière à ainsi libérer Pince de mise à la terre de la structure de ligne aérienne.

2. Pince de mise à la terre selon la revendication 1, dans laquelle la pince de mise à la terre comprend un levier d'actionnement mécanique pour déplacer cadre de pince de mise à la terre et/ou la partie magnétique dans une direction s'éloignant de la structure lorsque la pince de mise à la terre est fixée à la structure.

3. Pince de mise à la terre selon la revendication 2, dans laquelle le levier d'actionnement mécanique pour éloigner au moins le cadre de pince de mise à la terre et/ou la partie magnétique de la structure lorsque la pince de mise à la terre est fixée à une structure est conçu pour être utilisé avec une tête de distribution.

4. Pince de mise à la terre selon une quelconque des revendications précédentes, dans laquelle le cadre de pince de mise à la terre présente un profil curviligne.

5. Pince de mise à la terre selon une quelconque des revendications précédentes, dans laquelle la pince de mise à la terre comprend un ressort raccordé à la partie magnétique pour faciliter l'application d'une contre-force à la partie magnétique et éloigner la partie magnétique du niveau des points de contact.

6. Pince de mise à la terre selon une quelconque des revendications précédentes, dans laquelle la connexion entre la partie magnétique et le ressort est isolée électriquement du cadre de pince.

7. Pince de mise à la terre selon une quelconque des revendications précédentes, dans laquelle la partie magnétique (6) est connectée électriquement au cadre de pince par une connexion à tresse flexible.

8. Pince de mise à la terre selon une quelconque des revendications précédentes, dans laquelle le cadre de pince de mise à la terre comporte des guides.

9. Pince de mise à la terre selon une quelconque des revendications précédentes, dans laquelle la pince de mise à la terre comprend un couvercle de protection fixé de manière permanente appliqué sur l'aimant.

10. Pince de mise à la terre selon une quelconque des revendications 1 à 8, dans laquelle la pince de mise à la terre comprend un couvercle amovible pour la partie magnétique.

11. Prise de terre portable comprenant la pince de mise à la terre selon la revendication 1 et une extrémité de ligne qui y est connectée.
